# EUROPÄISCHE PATENTSCHRIFT

(11) **EP 0 458 250 B1**
(45) Veröffentlichungstag und Bekanntmachung des Hinweises auf die Patenterteilung: **01.03.1995**
(21) Anmeldenummer: 91108155.2
(22) Anmeldetag: 21.05.1991
(51) Int. Cl.: B29C 45/44, B65D 41/34

(54) **Verfahren und Vorrichtung zur Entformung eines Garantiebands einer Verschlusskappe**
Method and device for ejecting a tamper-evident ring of a closure cap
Procédé et dispositif de démoulage de la bande de garantie d'un capuchon de fermeture

(30) Priorität: 21.05.1990 DE 4016350
(43) Veröffentlichungstag der Anmeldung: 27.11.1991
(73) Patentinhaber: Schellenbach, Frank, D-75391 Gechingen (DE)
(72) Erfinder: Schellenbach, Frank, D-75391 Gechingen (DE)
(74) Vertreter: Altenburg, Udo, Dipl.-Phys.

(56) Entgegenhaltungen:
- EP-A- 0 125 097
- EP-A- 0 355 235
- CH-A- 669 556
- FR-A- 2 426 617
- FR-A- 2 457 813

## Beschreibung

Die Erfindung bezieht sich auf ein Verfahren zur Entformung eines Garantiebands einer Verschlußkappe, wie es aus der Patentschrift CH 669 556 bekannt und im Oberbegriff des Patentanspruchs 1 vorausgesetzt ist. Ferner bezieht sich die Erfindung auf eine Spritzgußvorrichtung, die so gestaltet ist, daß das beanspruchte Entformungsverfahren als Teil des Produktionszyklus Anwendung finden kann.

Ein Verfahren zur Entformung eines Garantiebands ist aus der französischen Patentschrift FR 2 426 617 bekannt. Diese Druckschrift wird zur Erläuterung des technischen Hintergrunds der Erfindung herangezogen.

Verschlußkappen aus Kunststoffmaterial, mir denen Getränkeflaschen oder ähnliche Behälter verschlossen werden können, haben weite Verbreitung gefunden. Solche Verschlußkappen bestehen häufig aus einer oberen Scheibe, an deren Unterseite ein Dichtungsring ausgeformt ist, ferner aus einer zylindrischen Seitenwand, die an der Innenseite mit einem Schraubgewinde versehen ist, und aus einem Garantieband, das über am Umfang verteilte, relativ schwache Stege am unteren Rand der Verschlußkappe hängt. Wenn eine derartige Verschlußkappe auf den Hals einer Getränkeflasche aufgeschraubt oder aufgedrückt worden ist und so einen sicheren Verschluß der Flasche gewährleistet, dann hat das Garantieband die Funktion, die Unversehrtheit des Verschlusses anzuzeigen. Zu diesem Zweck untergreift ein Wulst, der die Innenseite des Garantiebands umläuft, eine entsprechende Einkerbung am Flaschenhals. Beim erstmaligen Öffnen der Flasche führt die Schraubbewegung dazu, daß das Garantieband ganz oder teilweise von der Verschlußkappe abgerissen wird.

Die Herstellung einer Verschlußkappe mit daran hängendem Garantieband ist nicht einfach, weil die Spritzgußform nicht nur mehrere Hinterschneidungen, sondern auch eine Sollbruchstelle für den späteren Gebrauch enthält. Das grundsätzliche Problem bei der Herstellung derartiger Garantiebänder besteht darin, daß sie während des Herstellungsvorgangs nicht abreißen dürfen, wogegen sie im späteren Gebrauch keinen nennenswerten Widerstand leisten sollen, wenn die Verschlußkappe von der Flasche abgeschraubt wird. Da der Spritzkern der zur Herstellung benutzten Spritzgußvorrichtung eine ganz ähnliche Form hat wie der später benutzte Flaschenhals, müssen in der Spritzgußvorrichtung Vorkehrungen getroffen werden, um das Garantieband unversehrt frei zu bekommen. Die Vorkehrungen betreffen insbesondere die Phase der Entformung, in der ein fertig gespritztes Teil aus der Gußform herausgenommen wird. Innerhalb der Entformungsphase sind diejenigen Verfahrensschritte besonders kritisch, in denen das Garantieband vom Spritzkern abgestreift wird.

Die in FR 2 426 617 offenbarte Spritzgußvorrichtung und der dazugehörige Herstellungsablauf bieten die folgende Lösung des aufgezeigten Grundproblems an. Die geschlossene Spritzgußform besteht grundsätzlich aus einem Formnest, welches die äußere Form der Verschlußkappe bestimmt, und aus einem Spritzkern, welcher die innere Form der Verschlußkappe festlegt. Zum äußeren Formnest insgesamt zählen außer der oberen Abdeckung auch eine Gießkrone, die in Höhe der Stege (also in Höhe der Trennlinie zwischen Verschlußkappe und Garantieband) Kunststoffmaterial einspritzt sowie ein Formring, der die untere Außenfläche des Garantiebands formt. Nach Beendigung des Einspritzvorgangs kann die obere Abdeckplatte abgehoben und die Gießkrone als Abstreifplatte benutzt werden. Der unter der Abstreifplatte liegende Formring ist bei der bekannten Lösung unbeweglich. Auf diese Weise entsteht an der unteren Außenfläche des Garantiebands während des Abstreifvorgangs ein Freiraum zwischen dem festen Formring und der nach oben geführten Gießkrone, in welchen sich das Garantieband nach außen dehnen kann.

Der Spritzkern umfasst bei der bekannten Lösung einen axial beweglichen Zylinder, der sowohl das Schraubgewinde an der Innenseite der Verschlußkappe als auch einen wellenförmig umlaufenden Wulst an der Innenseite des Garantiebands formt. Diese bewegliche Innenform wird während der Entformungsphase in der Abstreifrichtung nach oben mitgeführt, bis sie durch einen Anschlag arretiert wird. Zu diesem Zeitpunkt können sowohl die Verschlußkappe als auch das Garantieband in die außen geschaffenen Freiräume gedehnt werden; lediglich im Bereich zwischen den Stegen greift die Gießkrone als Abstreifplatte unter die Verschlußkappe. Gleichzeitig greift die Gießkrone unter einen kleinen Hinterschnitt, der am Garantieband im oberen Teil seiner Außenfläche geformt wurde. An diesen zwei Umfangslinien setzen die Kräfte gleichzeitig an, welche die gesamte Verschlußkappe vom nunmehr arretierten Spritzkern abstreifen. Auf diese Weise sind die Verbindungsstege keiner axialen Beanspruchung ausgesetzt. Nach dem Abstreifen wird das fertige Teil, beispielsweise durch Druckluft, ausgeworfen. Weitere Einzelheiten zur Spritzgußherstellung von Verschlußkappen, welche mit Garantiebändern versehen sind, im allgemeinen und zur bekannten Entformung eines fertig gespritzten Teils im besonderen können aus dem Dokument FR 2 426 617 entnommen werden.

Bei dem bekannten Verfahren hat es sich als umständlich und mechanisch aufwendig erwiesen, daß beim Entformen ein beweglicher Formzylinder, der zwischen zwei feststehenden Zylindern geführt ist und der die Innenfläche von Verschlußkappe und Garantieband mit allen Hinterschnitten festlegt, einen Teil der Abstreifbewegung mitmachen muß, bevor er fixiert wird, um das Spritzgußteil endgültig entformen zu können. Hier setzt die Erfindung an und sucht nach einem günstigeren Ablauf des Entformungsvorgangs in Verbindung mit einem konstruktiv verbesserten Entformungswerkzeug. Die teilweise Freigabe der Außenfläche des Garantiebands soll erfolgen können, ohne daß ein zum Spritzkern gehörendes bewegliches Teil in Abstreifrichtung mitgeführt werden muß.

Im Unterschied zum Stand der Technik gemäß der französischen Patentschrift FR 2 426 617 wird bei dem Verfahren, das aus der schweizerischen Patentschrift CH 669 556 bekannt ist, die Freigabe des unteren Teils der Außenfläche des Garantiebands durch Absenken einer Freistellhülse erzielt (siehe Oberbegriff des Patentanspruchs 1). Bei dem Entformungsvorgang wird die Verschlußkappe durch die Abstreifplatte nach oben gehoben, wobei der Formring nicht mitbewegt wird, so daß das Garantieband allein durch die Abstreifplatte gestützt wird.

Die Aufgabe der Erfindung besteht deshalb darin, ein besseres Stützen des Garantiebands während des Entformungsvorgangs zu erzielen, die einerseits ohne das Mitführen eines Spritzkernteils in Abstreifrichtung auskommt und andererseits ein optimales Anpassen des Freistellvorgangs an die Form, Festigkeit und Elastizität des Garantiebands erlaubt.

Diese Aufgabe wird durch die in den Patentansprüchen 1, 6 und 10 genannten Merkmale gelöst. Zweckmäßige Weiterbildungen sind den zugehörigen Unteransprüchen zu entnehmen.

Das Ersetzen des bekannten Entformungsablaufs durch das neue Verfahren bietet einen wesentlichen Vorteil: Die äußere Freigabe des Garantiebands kann zeitlich und mechanisch zusammengelegt werden mit der Entformung einer Dichtlippe im Innern der Verschlußkappe, also mit einem Absenkvorgang, der sowieso ausgeführt werden muß. Dadurch verkürzt sich der aufwärts gerichtete Abstreifvorgang, weil der Spritzkern fixiert ist und nicht mitgeführt werden muß.

Die Unteransprüche sind auf weitere Ausgestaltungen der Erfindung gerichtet. Das Ausführungsbeispiel sieht vor, daß der Formring nach seinem Absenken als zusätzlicher Abstreifring wirkt, indem er unter das freie Ende des Garantiebands greift. Das freie Ende ist zu diesem Zweck als trichterförmig nach außen weisender Fortsatz ausgeformt. Diese Ausführungsform hat den weiteren Vorteil, daß nach dem Abfüllen einer Getränkeflasche das Aufsetzen der Verschlußkappe erleichtert wird, weil durch die Trichterwirkung des Garantiebands der Flaschenhals in der Verschlußkappe zentriert wird.

Der feststehende Spritzkern braucht nicht - wie es bei der Entformungsvorrichtung gemäß FR 2 426 617 der Fall ist - den untergreifenden Wulst über den gesamten Kreisumfang von 360° auszubilden. Es genügen mehrere Teilsektoren, in denen jeweils einem Wulst eine Sollbruchlinie zugeordnet ist. Im Grenzfall kann ein einziger Wulst vorgesehen sein, der weniger als die Hälfte der Umfangslinie einnimmt. Jede Unterbrechung des Wulstes begünstigt das Abstreifen des Garantiebands vom Spritzkern. Während die Entformung also erleichtert wird, bleibt die Garantiefunktion beim erstmaligen Abschrauben der Verschlußkappe erhalten. Für die Garantiefunktion durchlaufen nämlich die Stege nacheinander einen Ort maximaler Zugkraft.

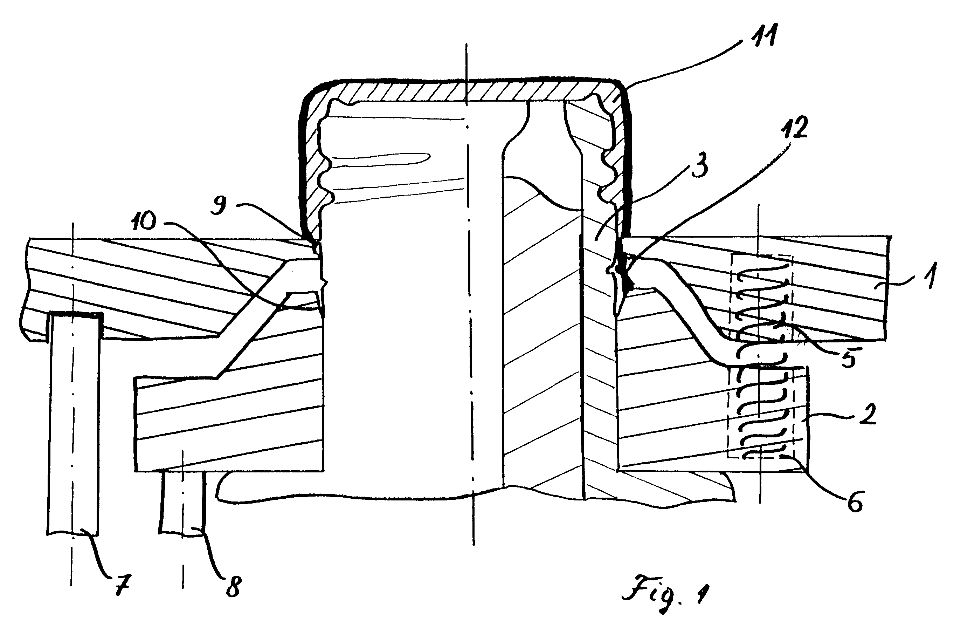

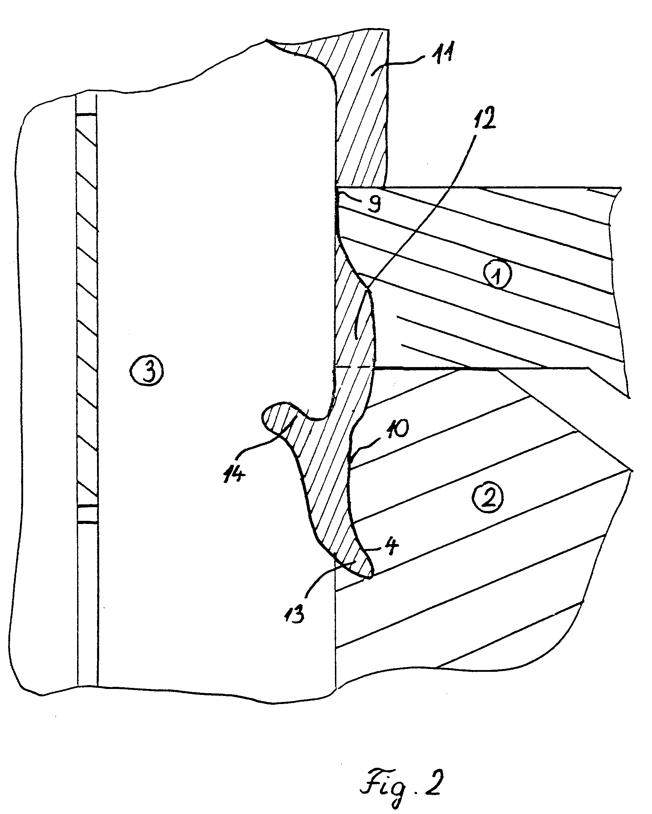

Die Erfindung wird an Hand der Figuren 1 und 2 näher erläutert. Es zeigt
- Figur 1:: diejenigen Teile einer erfindungsgemäßen Spritzgußvorrichtung, welche für die Entformung eines Garantiebands wichtig sind;
- Figur 2:: einen stark vergrößerten Ausschnitt aus der Ansicht gemäß Figur 1, aus der deutlich wird, wie die Gußform für das Garantieband geöffnet und geschlossen werden kann.

In Figur 1 legen die Abstreifplatte 1, der Formring 2 und der Spritzkern 3 die Gußform für das Garantieband 12 fest. Der Spritzkern 3 bestimmt auch die innere Form der Verschlußkappe 11. Im gezeichneten Zustand ist das Formnest, welches die äußere Form der Verschlußkappe 11 festlegt, bereits abgenommen. Der Formring 2 ist in der Lage gezeichnet, in welcher er durch die elastische Kraft des Federpakets 5, 6 relativ zur Abstreifplatte 1 abgesenkt wurde. Dadurch wurde das Garantieband 12 im unteren Teil seiner Außenfläche freigegeben. Das Absenken des Formrings 2 wird durch die Entformungsschräge 10 ermöglicht. In Fig. 1 ist das Garantieband 12 an der linken Seite der Verschlußkappe 11 nicht gezeichnet, um die Einzelheiten der geöffneten Gußform besser erkennen zu können.

Die Abstreifplatte 1 ist mit Einspritzpunkten 9 versehen und erfüllt daher während des Einspritzvorgangs die Funktion einer Gießkrone. Die Abstreifplatte 1 und der Formring 2 sind in einer gemeinsamen Platte untergebracht, die mehrere der in Figur 1 dargestellten Vorrichtungen gleichzeitig enthält. Es sind pro Vorrichtung mehrere Druckstangen 8 vorgesehen, um den Formring 2 gegen die Kraft des Federpakets 5, 6 anzuheben und so die Gußform für das Garantieband 12 zu schließen. Die Abstreifstangen 7 dienen dazu, die Abstreifplatte 1 zu heben und zu senken.

Unter Zuhilfenahme der Figur 2 wird erläutert, wie das erfindungsgemäße Entformungsverfahren beim bevorzugten Ausführungsbeispiel in den Herstellungsprozess eingebettet ist. Die Abstreifplatte 1 wird mit Hilfe der Abstreifstangen 7 in die Position gefahren, in der sie als Gießkrone wirkt. Der Formring 2 schließt mit Hilfe der Druckstangen 8 die Gußform nach unten ab, während ein Formnest (nicht dargestellt) über den Spritzkern 3 gestülpt wird, um die Gußform für die eigentliche Verschlußkappe 11 nach oben zu schließen. Das Federpaket 5, 6 ist durch das Anheben des Formrings 2 zusammengedrückt. Der größere Teil der Verschlußkappe 11 wird durch mittiges Einspritzen von der Oberseite her gegossen. Als Einspritzmaterial wird vorzugsweise Polyethylen verwendet. An den Einspritzpunkten 9 der Gießkrone 1 wird das übrige Material für den unteren Teil der Verschlußkappe 11 sowie das Material für das Garantieband 12 eingespritzt. In Figur 2 ist die Schnittansicht der Gießkrone 1 in einer Stelle gezeigt, an der das Garantieband 12 durch einen Zwischenraum von der Verschlußkappe 11 getrennt ist. Davor und dahinter sind die Stege (nicht dargestellt) zu denken, mit denen das Garantieband 12 an der Verschlußkappe 11 hängt. Die Zwischenräume und die Stege bilden die Sollbruchlinie für die spätere Benutzung. Die Sollbruchstelle kann auch aus mehreren, über den Umfang von 360° verteilten Sollbruchstellen mit festeren Zwischenstegen bestehen. Das Material, das in den Punkten 9 eingespritzt wird, fließt ganz nach unten bis in eine ringförmige Ausnehmung 4, die in den Formring 2 eingearbeitet ist. Außerdem wird durch die in Figur 2 dargestellte Kerbe im Spritzkern 3 auch der innere Wulst 14 geformt, der nach dem Verschließen einer Getränkeflasche unter den Flaschenhals zu liegen kommt. In der Abstreifplatte 1 ist bei diesem Ausführungsbeispiel keine Entformungshilfe für das Garantieband 12 vorgesehen.

Nachdem der Spritzguß beendet ist, öffnet das Werkzeug. Das Formnest (nicht dargestellt) wird abgehoben. Die Druckstangen 8 werden freigegeben und das Federpaket 5, 6 drückt den Formring 2 nach unten. Die leichte Entformungsschräge 10 des Formrings 2 läßt im Verlauf der Absenkbewegung zunehmend größere Freiräume entstehen. Das Material des Garantiebands 12 ist flexibel und die Ausnehmung 4 reicht in ihrer radialen Erstreckung geringfügig über die Oberkante des Formrings 2 hinaus. Die Siege (nicht dargestellt) und die Unterseite des Wulstes 14 bringen gemeinsam die relativ geringe Kraft auf, die notwendig ist, um die Nase 13 aus der Ausnehmung 4 herauszuziehen. In praktischen Untersuchungen wurde festgestellt, daß die Formgebung gemäß Figur 2 so an die elastischen Eigenschaften des verwendeten Polyethylen-Materials angepasst werden kann, daß die Nase 13 beim Absenken des Formrings 2 nicht abgeschert oder sonstwie beschädigt wird.

Nachdem der Formring 2 bis zur Unterkante der Nase 13 geöffnet ist, springt die Nase 13 auf die Oberkante des Formrings 2 und stellt sich leicht nach außen. Danach läuft die große Platte, in der die Abstreifplatte 1 und der Formring 2 zusammen untergebracht sind, mit Hilfe der Abstreifstangen 7 nach oben. Bei dieser Bewegung hebt die Abstreifplatte 1 die Verschlußkappe 11 nach oben, weil sie zwischen den Stegen den unteren Rand der Verschlußkappe 11 erfasst. Gleichzeitig drückt der Formring 2 gegen den nach außen gestülpten Rand 13 des Garantiebands 12 und streift den Wulst 14 über den Spritzkern 3 nach oben. Auf diese Art werden die Stege (nicht dargestellt) durch keine nennenswerten Zugkräfte belastet. Wegen der öffnenden Wirkung, welche die Aufwärtsbewegung des Formrings 2 auf den trichterförmigen Rand 13 des Garantiebands 12 ausübt, kann die Oberseite des Wulstes 14 sogar V-förmig eingesenkt sein. Dennoch ist die Abstreifbewegung ausführbar. Eine derartige Formgebung am Wulst 14 war bisher nur möglich, wenn das Garantieband 12 getrennt von der Verschlußkappe 11 hergestellt und durch eine umgekehrte Abstreifbewegung nach unten entformt wurde.

Sobald die Verschlußkappe 11 einschließlich des Garantiebands 12 vom Spritzkern 3 abgestreift ist, kann sie vollends nach oben ausgestoßen werden. Danach wiederholt sich der Bearbeitungszyklus, beginnend mit dem Schließen der Form.

## Patentansprüche

1. Verfahren zur Entformung eines Garantiebands einer Verschlußkappe,
- wobei diesem Entformungsverfahren zunächst eine Spritzgußherstellung der Verschlußkappe (11) samt des daranhängenden Garantiebands (12)
- sowie eine Öffnung der Gußform durch Abheben eines Formnests von einem Spritzkern (3) vorausgeht,
- und wobei das Garantieband (12) gemeinsam mit der Verschlußkappe (11), die von einer Abstreifplatte (1) untergriffen ist, von dem Spritzkern (3) abgestreift wird,
- nachdem die Außenfläche des flexiblen Garantiebands (12) im Bereich eines an seiner Innenfläche gegenüberliegenden Wulstes (14) freigegeben wurde,
- wobei die Freigabe des unteren Teils der Außenfläche des Garantiebands (12) durch Abserken eines Formrings (2) erzielt wird, welcher beweglich in die Abstreifplatte (1) eingelassen ist,
- und wobei die Abstreifplatte (1) die Verschlußkappe (11) hebt,
**dadurch gekennzeichnet, daß**
die Absenkung des Formrings (2) in der Abstreifplatte (1) durch Federkraft (5, 6) erfolgt worauf der Formring (2) gegen das Garantieband (12) drückt und daß der Formring (2) und die Abstreifplatte (1) gemeinsam nach oben laufen, um das Garantieband (12) vom feststehenden Spritzkern (3) abzustreifen.

2. Entformungsverfahren nach Anspruch 1, dadurch gekennzeichnet, daß der Formring (2) bis zur Unterkante des Garantiebands (12) abgesenkt wird.

3. Entformungsverfahren nach Anspruch 1 oder 2, dadurch gekennzeichnet, daß das Material für das Garantieband (12) und für einen Teil der Verschlußkappe (11) oberhalb (9) von Stegen eingespritzt wird, mit denen das Garantieband (12) an der Verschlußkappe (11) hängt.

4. Entformungsverfahren nach Anspruch 2 oder 3, dadurch gekennzeichnet, daß das Verfahren so durchgeführt wird, daß der freie, untere Rand (Nase 13) des Garantiebands (12) sich nach dem Absenken des Formrings (2) über dessen Oberkante nach außen stellt.

5. Entformungsverfahren nach Anspruch 4, dadurch gekennzeichnet, daß der Formring (2) das Garantieband (12) von dem Spritzkern (3) abstreift, wenn er (2) gemeinsam mit der Abstreifplatte (1), welche die Verschlußkappe (11) abstreift, nach oben läuft.

6. Vorrichtung zur Entformung eines Garantiebands einer Verschlußkappe, mit folgenden Merkmalen:
- eine Abstreifplatte (1), die gleichzeitig als Gießkrone (9) zum Einspritzen des Materials für das Garantieband (12) ausgelegt ist und die dessen (12) obere Außenfläche formt,
- einen Formring (2), der in die Abstreifplatte (1) axial beweglich eingelassen ist und der die untere Außenfläche (10) des Garantiebands (12) formt,
- einen feststehenden Spritzkern (3), der die Innenfläche des Garantiebands (12) einschließlich eines hinterschneidenden Wulstes (14) formt,
- ein Federpaket (5, 6), das den Formring (2) in der Abstreifplatte (1) absenkt.

7. Entformungsvorrichtung nach Anspruch 6, dadurch gekennzeichnet, daß der feststehende Spritzkern (3) den Wulst (14) so formt, daß er an seiner zur Verschlußkappe weisenden Seite V-förmig eingesenkt ist.

8. Entformungsvorrichtung nach Anspruch 6 oder 7, gekennzeichnet durch Druckstangen (8), welche die Gußform für das Garantieband (12) gegen die Kraft des Federpakets (5, 6) schließen.

9. Entformungsvorrichtung nach Anspruch 6 bis 8, gekennzeichnet durch eine ringförmige Ausnehmung (4) im absenkbaren Formring (2), welche am freien Ende des Garantiebands (12) einen Fortsatz (Nase 13) formt.

10. Garantieband hergestellt nach dem Verfahren des Anspruchs 1, welches über abtrennbare Stege an einer Verschlußkappe hängt und welches an seiner Innenseite einen oder mehrere umlaufende Wulste aufweist, die bei der Benutzung des Garantiebands einen Flaschenhals untergreifen,
gekennzeichnet durch einen trichterförmig nach außen gestülpten Fortsatz (13) am freien Ende des Garantiebands (12), dessen Außendurchmesser etwas größer ist als der Außendurchmesser des Garantiebands (12) an der Trennstelle der Spritzgußform (1, 2) zwischen der Abstreifplatte und dem Formring.

## Claims

1. Method for demoulding a tamper-indicating band of a closure cap,
- said demoulding method being preceded firstly by injection-moulding production of the closure cap (11) together with the attached tamper-indicating band (12)
- and by opening of the mould by lifting a cavity off a core (3),
- and the tamper-indicating band (12) being stripped off the core (3) together with the closure cap (11) which is supported on a stripper plate (1),
- after the outer surface of the flexible tamper-indicating band (12) has been released in the region of a bead (14) located opposite its inner surface,
- the release of the lower part of the outer surface of the tamper-indicating band (12) being achieved by lowering a mould ring (2) which is recessed movably in the stripper plate (1),
- and the stripper plate (1) lifting the closure cap (11),
characterized in that
the lowering of the mould ring (2) in the stripper plate (1) takes place by means of spring force (5, 6), after which the mould ring (2) presses against the tamper-indicating band (12), and in that the mould ring (2) and the stripper plate (1) move upwards together in order to strip the tamper-indicating band (12) off the stationary core (3).

2. Demoulding method according to Claim 1, characterized in that the mould ring (2) is lowered down to the lower edge of the tamper-indicating band (12).

3. Demoulding method according to Claim 1 or 2, characterized in that the material for the tamper-indicating band (12) and for part of the closure cap (11) is injected above (9) webs by means of which the tamper-indicating band (12) is attached to the closure cap (11).

4. Demoulding method according to Claim 2 or 3, characterized in that the method is carried out in such a way that the free, lower edge (lug 13) of the tamper-indicating band (12) slants outwards when the mould ring (2) has been lowered over the upper edge of said tamper-indicating band.

5. Demoulding method according to Claim 4, characterized in that the mould ring (2) strips the tamper-indicating band (12) off the core (3) when it (2) moves upwards together with the stripper plate (1) which strips off the closure cap (11).

6. Method for demoulding a tamper-indicating band of a closure cap, having the following features:
- a stripper plate (1) which is, at the same time, designed as a casting head (9) for injecting the material for the tamper-indicating band (12) and moulds its (12) upper outer surface,
- a mould ring (2) which is recessed axially movably in the stripper plate (1) and moulds the lower outer surface (10) of the tamper-indicating band (12),
- a stationary core (3) which moulds the inner surface of the tamper-indicating band (12) including an under-cutting bead (14),
- a spring assembly (5, 6) which lowers the mould ring (2) in the stripper plate (1).

7. Demoulding device according to Claim 6, characterized in that the stationary core (3) moulds the bead (14) in such a way that it is notched in a V-shape on its side facing the closure cap.

8. Demoulding device according to Claim 6 or 7, characterized by pressure rods (8) which close the mould for the tamper-indicating band (12) counter to the force of the spring assembly (5, 6).

9. Demoulding device according to Claim 6 to 8, characterized by an annular recess (4) in the lowerable mould ring (2), which recess moulds a projection (lug 13) at the free end of the tamper-indicating band (12).

10. Tamper-indicating band, produced according to the method of Claim 1, which is attached to a closure cap via separable webs and which has, on its inner side, one or more peripheral beads which are positioned below a bottle neck when the tamper-indicating band is used, characterized by a projection (13), turned outwards in a funnel shape, at the free end of the tamper-indicating band (12), the outside diameter of which projection is slightly larger than the outside diameter of the tamper-indicating band (12) at the separation point of the injection mould (1, 2) between the stripper plate and the mould ring.

## Revendications

1. Procédé pour l'extraction d'une bande de garantie d'un bouchon,
- ce procédé d'extraction étant tout d'abord précédé d'une fabrication par moulage par injection d'un bouchon (11) avec la bande de garantie (12) qui lui est attachée,
- ainsi que d'une ouverture du moule qui est effectuée en enlevant une empreinte de moule d'un noyau d'injection (3),
- et la bande de garantie (12), conjointement avec le bouchon (11) qui est saisi par une plaque de démoulage (1), étant démoulée du noyau d'injection (3),
- après que la face extérieure de la bande flexible de garantie (12) a été libérée au niveau d'un renflement (14) qui se trouve à l'opposé sur sa face intérieure,
- la libération de la partie inférieure de la face extérieure de la bande de garantie (12) étant obtenue grâce à l'abaissement d'un anneau de moule (2) qui est introduit mobile dans la plaque de démoulage (1),
- et la plaque de démoulage (1) soulevant le bouchon (11),
caractérisé par le fait que
l'abaissement de l'anneau de moule (2) dans la plaque de démoulage (1) est effectué par une force élastique (5, 6), après quoi l'anneau de moule (2) pousse contre la bande de garantie (12), et que l'anneau de moule (2) et la plaque de démoulage (1) s'élèvent ensemble vers le haut afin de démouler la bande de garantie (12) hors du noyau fixe d'injection (3).

2. Procédé d'extraction selon la revendication 1, caractérisé par le fait que l'anneau de moule (2) est abaissé jusqu'à l'arête inférieure de la bande de garantie (12).

3. Procédé d'extraction selon la revendication 1 ou 2, caractérisé par le fait que la matière pour la bande de garantie (12) et pour une partie du bouchon (11) est injectée au-dessus (9) des arêtes avec lesquelles la bande de garantie (12) est attachée au bouchon (11).

4. Procédé d'extraction selon la revendication 2 ou 3, caractérisé par le fait que le procédé est exécuté de telle sorte que le bord libre inférieur (prolongement 13) de la bande de garantie (12) se positionne vers l'extérieur au-dessus de l'arête supérieure de l'anneau de moule (2) après l'abaissement de ce dernier.

5. Procédé d'extraction selon la revendication 4, caractérisé par le fait que l'anneau de moule (2) dégage la bande de garantie (12) hors du noyau d'injection (3) lorsqu'il (2) s'élève, conjointement avec la plaque de démoulage (1) qui dégage le bouchon (11), vers le haut.

6. Dispositif pour l'extraction d'une bande de garantie d'un bouchon avec les caractéristiques suivantes :
- une plaque de démoulage (1), qui est en même temps construite comme couronne de moulage (9) destinée à l'injection de la matière pour la bande de garantie (12) et qui moule la surface extérieure supérieure de celle-ci (12),
- un anneau de moule (2), qui est introduit mobile le long d'un axe dans la plaque de démoulage (1) et qui moule la face extérieure inférieure (10) de la bande de garantie (12),
- un noyau fixe d'injection (3), qui moule la face intérieure de la bande de garantie (12), y compris un renflement formant contre-dépouille (14),
- un bloc-ressort (5, 6), qui abaisse l'anneau de moule (2) dans la plaque de démoulage (1).

7. Dispositif d'extraction selon la revendication 6, caractérisé par le fait que le noyau fixe d'injection (3) moule le renflement (14) de telle sorte qu'il est foncé en forme de V sur sa face tournée vers le bouchon.

8. Dispositif d'extraction selon la revendication 6 ou 7, caractérisé par des tiges de compression (8) qui ferment le moule pour la bande de garantie (12) contre la force du bloc-ressort (5, 6).

9. Dispositif d'extraction selon la revendication 6 à 8, caractérisé par un évidement (4) en forme d'anneau dans l'anneau de moule (2) qui peut être abaissé, évidement qui moule un prolongement (13) à l'extrémité libre de la bande de garantie (12).

10. Bande de garantie, fabriquée selon le procédé de la revendication 1, qui est attachée à un bouchon par l'intermédiaire d'arêtes séparables et qui comporte sur sa face intérieure un ou plusieurs renflements périphériques qui mordent par en dessous le goulot d'une bouteille lors de l'utilisation de la bande de garantie,
caractérisée par un prolongement (13), embouti en forme d'entonnoir vers l'extérieur, à l'extrémité libre de la bande de garantie (12), prolongement dont le diamètre extérieur est un peu plus grand que le diamètre extérieur de la bande de garantie (12) au niveau de l'endroit de séparation du moule par injection (1, 2) entre la plaque de démoulage et l'anneau de moule.
